# EUROPEAN PATENT APPLICATION

(11) **EP 4 671 165 A1**
(43) Date of publication of application: **31.12.2025**
(21) Application number: 24773943.6
(22) Date of filing: 11.03.2024
(51) Int. Cl.: B65G 47/24

(54) **CONVEYING DEVICE**

(30) Priority: 22.03.2023 CN 202320659104 U
(71) Applicant: Sunwoda Mobility Energy Technology Co., Ltd., Shenzhen, Guangdong 518107 (CN)
(72) Inventor: WANG, Yuhao, Shenzhen, Guangdong 518107 (CN); PENG, Yuhui, Shenzhen, Guangdong 518107 (CN)
(74) Representative: Metida
(86) International application number: PCT/CN2024/080959
(87) International publication number: WO 2024/193376

(57) **Abstract**

A conveying device (100), comprising a diverting assembly (10), a feeding belt (20), a loading belt (30), and an unloading belt (40). The diverting assembly (10) comprises a first conveyor belt (11), a second conveyor belt (12), a first diverting belt (13), a second diverting belt (14) and transfer vehicles (15) which are arranged to form a closed loop; the transfer vehicle (15) is configured for changing a conveying direction of a tray (90). In the conveying device (100), the provision of the diverting assembly (10) resolves the technical problem of mismatched intervals between the feeding of the feeding belt (20) and the supplying of the loading belt (30), ensuring the stability of supplying.

## Description

### CROSS-REFERENCE TO RELATED APPLICATION

The present disclosure claims the benefit of Chinese patent application No. 202320659104.8, filed on March 22, 2023, which is incorporated herein by reference in its entirety.

### TECHNICAL FIELD

The present disclosure relates to the field of material conveying systems, and in particular to a conveying device.

### BACKGROUND

With the continuous development and progress of science and technology, manufacturing enterprises have gradually adopted automated or semi-automated production and processing methods. Through automated or semi-automated production and processing methods, costs can be effectively saved while improving production and processing efficiency. In an automated production process, both processing raw materials and processing finished products require to transport raw materials in a timely and positioned manner to ensure the processing of raw materials or the stacking and sorting of the finished products.

In the field of material handling, the most commonly used is a conveyor, which drives the raw materials to move on the conveyor belt through the movement of the conveyor belt or rotation of rollers, thereby completing the material handling operation. However, an existing conveyor generally adopts linear belts, and the raw materials can only move in a single direction on the conveyor belt, that is, one end is for feeding and the other end is for picking. This requires that the feeding interval is the same as the picking interval to ensure that every material placed on the conveyor belt is accurately picked up. If the feeding interval and the picking interval are different or irregular, the conveyor belt can only be intermittently stopped operating to complete adjustment and controlling, which can easily cause equipment damage. In a case where the feeding interval and the picking interval are different or irregular, existing conveyors cannot guarantee the stability of feeding.

### SUMMARY OF THE DISCLOSURE

The technical problem to be solved by the present disclosure is:

In a case where the feeding time interval and the picking time interval are different or irregular, existing conveyors cannot ensure the stability of feeding.

In order to solve the above technical problem, the present disclosure provides a conveying device for conveying a tray, and the conveying device comprises:
a diverting assembly comprising a first conveyor belt, a second conveyor belt, a first diverting belt, a second diverting belt and transfer vehicles, wherein the first conveyor belt and the second conveyor belt are arranged side by side in a second direction, the first diverting belt and the second diverting belt are arranged in a first direction between the first conveyor belt and the second conveyor belt, the first conveyor belt, the first diverting belt, the second conveyor belt and the second diverting belt are joined to form a loop, two ends of the first conveyor belt in the first direction are respectively provided with a first station and a second station, two ends of the second conveyor belt in the first direction are respectively provided with a third station and a fourth station, the transfer vehicles are respectively disposed at the first station, the second station, the third station and the fourth station, and the transfer vehicles are configured to change a movement direction of the tray so as to enable the tray move through joints between the first and second conveyor belts and the first and second diverting belts with different conveying directions;
a feeding belt aligned to the first station of the first conveyor belt and configured to feed the tray which carries materials to the first station along the first direction and towards the first conveyor belt and to take the tray which is empty away from the first station along a direction opposite to the first direction and away from the first conveying belt;
a loading belt connected to the third station of the second conveyor belt and configured to convey the tray which carries materials from the third station along the first direction and away from the second conveyor belt; and
an unloading belt connected to the second station of the first conveyor belt and configured to convey the tray which is empty to the second station along the direction opposite to the first direction and towards the first conveyor belt.

In one embodiment, the conveying device further comprises a guide assembly connected to the diverting assembly, and the first conveyor belt, the first diverting belt, the second conveyor belt and the second diverting belt are arranged around the guide assembly.

In one embodiment, the guide assembly comprises a mounting seat, a guide strip and a rubber strip; a plurality of the mounting seats are provided and are each connected to the first conveyor belt, the first diverting belt, the second conveyor belt or the second diverting belt; the guide strip is looped, a shape of the guide strip corresponds to a shape enclosed by the first conveyor belt, the first diverting belt, the second conveyor belt and the second diverting belt, and the rubber strip is sleeved over the guide strip.

In one embodiment, the plurality of the mounting seats are arranged at intervals along the guide strip and at an inner side of the guide strip; each of the plurality of the mounting seats comprises a supporting block, a connecting rod passing through the supporting block, and an adjustment block connected to the connecting rod, the supporting block is fixedly connected to the first conveyor belt, the first diverting belt, the second conveyor belt or the second diverting belt, the connecting rod is detachably connected to the guide strip, and the adjustment block is threadedly connected to the connecting rod and abuts against the supporting block.

In one embodiment, the connecting rod comprises an extension portion and a clamped portion, the extension portion passes through the supporting block and is threadedly connected to the adjustment block, the clamped portion is disposed at one end of the extension portion close to the guide strip and protrudes from a surface of the extension portion away from the extension portion, a clamping groove is provided on the guide strip, and the clamped portion is correspondingly clamped into the clamping groove.

In one embodiment, at least two adjustment holes are provided on the supporting block, the at least two adjustment holes are arranged at intervals perpendicular to the movement direction of the tray, and the connecting rod is passed through one of the at least two adjustment holes.

In one embodiment, the guide strip is looped into a rectangular shape, four corners of the guide strip respectively correspond to the first station, the second station, the third station and the fourth station, the guide strip is provided with chamfers, and the chamfers are correspondingly disposed at the four corners of the guide strip which is rectangular.

In one embodiment, a shape of the rubber strip corresponds to the shape of the guide strip; the rubber strip is provided with an embedded groove, the embedded groove is ring-shaped and disposed on a side of the rubber strip close to the guide strip, and the guide strip is correspondingly embedded in the embedded groove.

In one embodiment, the loading belt and the unloading belt are parallel, and the unloading belt, the first conveying belt, and the feeding belt are disposed along a single direction.

In one embodiment, the feeding belt comprises a support frame, feeding rollers mounted on the support frame, and a feed drive member connected to the feeding rollers, the feeding rollers are each rotatable relative to the support frame and are arranged on the support frame at intervals in a conveying direction of the feeding belt, and the feed drive member is configured to drive the feeding rollers to bidirectionally rotate relative to the support frame.

Compared with the prior art, the above-mentioned conveying device has the following advantages.

By arranging the diverting assembly, the tray carrying materials conveyed by the feeding belt can circulate on the looped diverting assembly. When material supply is needed, only the tray carrying materials on the diverting assembly needs to be conveyed onto the loading conveyor for the material supply, and after the material supply is completed, the empty tray is conveyed back to the diverting assembly by the unloading belt, then taken away by the feeding belt. The arrangement of the diverting assembly solves the problem of mismatched intervals between the feeding of the feeding belt and the supplying of the loading belt, thus ensuring the stability of material supply.

### BRIEF DESCRIPTION OF DRAWINGS

FIG.1 is a schematic structural diagram of a conveying device according to one embodiment of the present disclosure;
FIG.2 is an exploded view of the diverting assembly shown in FIG.1;
FIG.3 is a schematic structural diagram of the feeding belt shown in FIG.1;
FIG.4 is a schematic structural diagram of the guide assembly shown in FIG.1;
FIG.5 is an enlarged view of Part A in FIG.4;
FIG.6 is an exploded view of the guide assembly shown in FIG.4.

List of reference numerals:
100-conveying device;
10-diverting assembly, 11-first conveyor belt, 12-second conveyor belt, 13-first diverting belt, 14-second diverting belt, 15-transfer vehicle, 16-first station, 17-second station, 18-third station, 19-fourth station;
20-feeding belt, 21-support frame, 22-feeding roller, 23-feed drive member;
30-loading belt;
40-unloading belt;
50-guide assembly, 51-mounting seat, 511-supporting block, 5115-adjustment hole, 512-connecting rod, 5121-extension portion, 5122-clamped portion, 513-adjustment block, 52-guide strip, 521-clamping groove, 525-chamfer, 53-rubber strip, 535-embedded groove;
90-tray;
X-first direction, Y-second direction.

### DETAILED DESCRIPTION

In order to make the above-mentioned objectives, features and advantages of the present disclosure more obvious and easy to understand, the specific embodiments of the present disclosure are described in detail below with reference to the accompanying drawings. In the following description, numerous specific details are set forth to provide a thorough understanding of the present disclosure. However, the present disclosure can be implemented in many other ways than those described herein, and those skilled in the art can make similar improvements without violating the scope of the present disclosure. Therefore, the present disclosure is not limited to the specific embodiments disclosed below.

In the description of the present disclosure, it should be understood that the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential" and the like to indicate orientations or positional relationships are based on the orientations or positional relationships shown in the accompanying drawings, and are only for the convenience of describing the present disclosure and simplifying the description, and do not indicate or imply that the device or element referred to must have a specific orientation, be constructed and operated in a specific orientation, and therefore should not be understood as a limitation to the present disclosure.

In addition, the terms "first" and "second" are used for descriptive purposes only and should not be understood as indicating or implying relative importance or implicitly indicating the quantity of the indicated technical features. Therefore, a feature defined by "first" or "second" may explicitly or implicitly include at least one such feature. In the description of the present disclosure, the limitation "a plurality of" means at least two, such as two, three, etc., unless otherwise clearly defined.

In the description of the present disclosure, it should be noted that the terms "mount", "communication", "connection" and "fixing" should be understood in a broad sense, unless expressly specified and limited otherwise. For example, these terms mean a fixed connection, a detachable connection, or an integral connection; mean a mechanical connection or an electrical connection; and mean a direct connection, an indirect connection via an intermediate medium, or a communication of interiors of two elements. For those of ordinary skill in the art, the specific meanings of the above terms in the present disclosure may be understood according to specific situations.

In the description of the present disclosure, unless otherwise clearly specified and limited, a first feature being "on" or "under" a second feature may mean that the first and second features are in direct contact, or the first and second features are in indirect contact through an intermediate medium. Moreover, the first feature being "above", "over" and "on" the second feature may mean that the first feature is directly above or obliquely above the second feature, or simply means that the first feature is higher than the second feature viewed horizontally. Similarly, the first feature being "below", "beneath", and "under" the second feature may mean that the first feature is directly below or obliquely below the second feature, or simply means that the first feature is lower than the second feature viewed horizontally.

It should be noted that when an element is referred to as being "fixed to" or "mounted to" the other element, it may be directly on the other element or there may be an intervening element. When an element is referred to as being "connected to" the other element, it can be directly connected to the other element or intervening elements may be present. The terms "vertical," "horizontal," "upper," "lower," "left," "right," and similar expressions used herein are for illustrative purposes only and do not represent the only implementations.

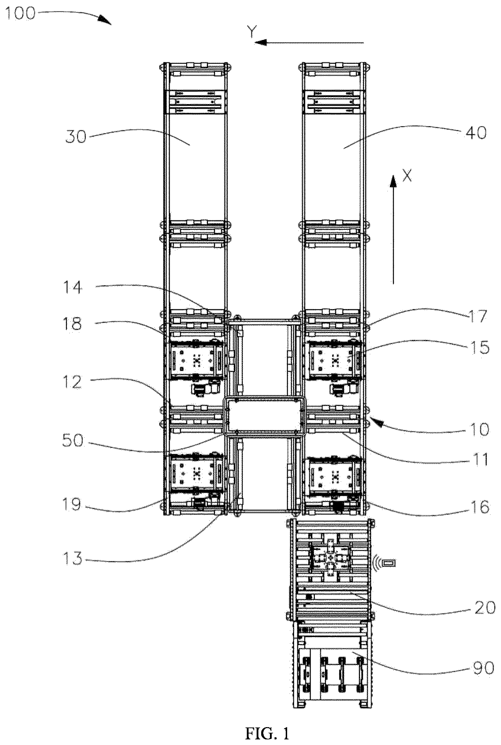

It should be noted that, as shown in FIG.1, the direction indicated by X and the direction indicated by Y as used in the embodiment of the present disclosure are coplanar and perpendicular to each other. For ease of description, the first direction is defined as the direction indicated by X, and the second direction is defined as the direction indicated by Y.

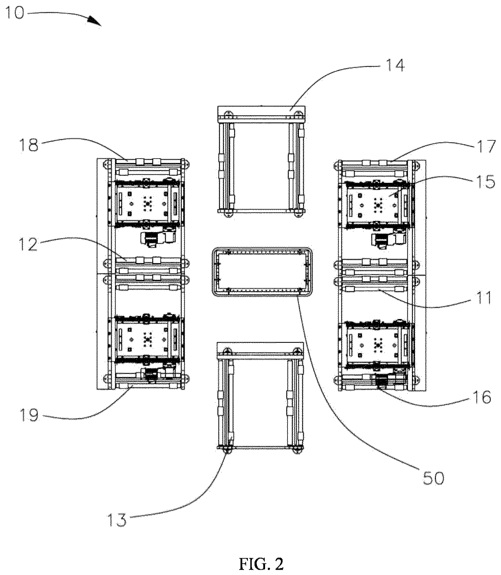

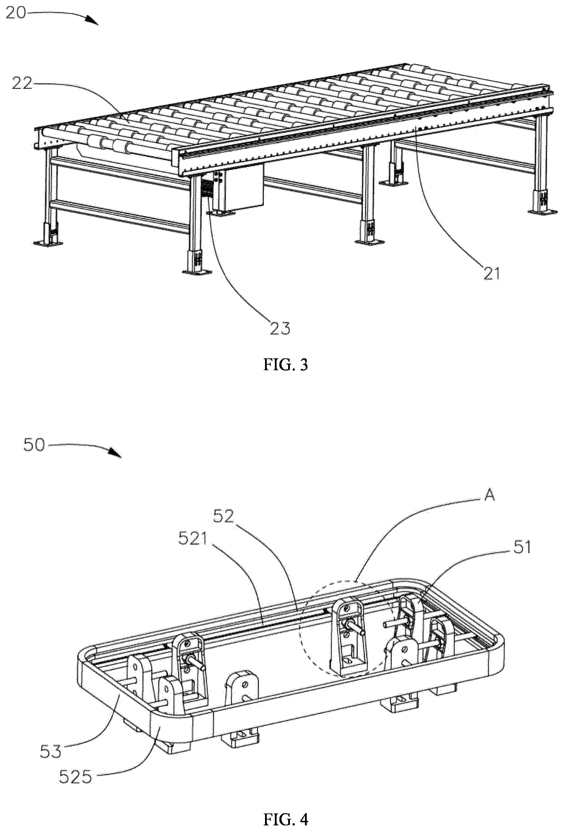

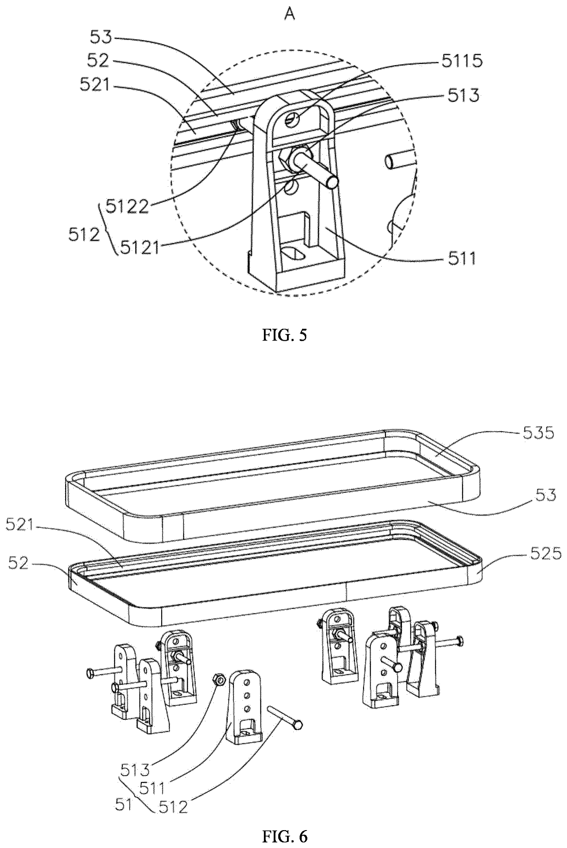

Refer to FIGS. 1 to 6 showing a conveying device 100 for conveying a tray 90 according to one embodiment of the present disclosure. The conveying device 100 includes a diverting assembly 10, a feeding belt 20, a loading belt 30, an unloading belt 40, and a guide assembly 50. The diverting assembly 10 includes a first conveyor belt 11, a second conveyor belt 12, a first diverting belt 13, a second diverting belt 14 and transfer vehicles 15. The first conveyor belt 11 and the second conveyor belt 12 are arranged side by side in a second direction, and the first diverting belt 13 and the second diverting belt 14 are arranged in a first direction between the first conveyor belt 11 and the second conveyor belt 12. The first conveyor belt 11, the first diverting belt 13, the second conveyor belt 12 and the second diverting belt 14 are joined to form a loop, so as to ensure that the tray 90 can be moved in a loop path on the diverting assembly 10. A first station 16 and a second station 17 are respectively arranged at two ends of the first conveyor belt 11 in the first direction, and a fourth station 19 and a third station 18 are respectively arranged at two ends of the second conveyor belt 12 in the first direction. The transfer vehicles 15 are respectively disposed at the first station 16, the second station 17, the third station 18, and the fourth station 19. The transfer vehicles 15 are configured to change a movement direction of the tray 90, enabling the tray 90 move through joints between the first 11 and second 12 conveyor belts and the first 13 and second 14 diverting belts with different conveying directions.

The feeding belt 20 is aligned to the first station 16 of the first conveyor belt 11. The feeding belt 20 is configured to feed the tray 90 carrying materials to the first station 16 along the first direction and towards the first conveyor belt 11, and to take the empty tray 90 away from the first station 16 along a direction opposite to the first direction and away from the first conveyor belt 11. That is, the feeding belt 20 has a bidirectional conveying function, which can not only feed the tray 90 carrying materials onto the first conveyor belt 11, but also receive the empty tray 90 conveyed by the first conveyor belt 11 and take away the empty tray 90. The loading belt 30 is connected to the third station 18 of the second conveyor belt 12. The loading belt 30 is configured to convey the tray 90 carrying materials from the third station 18 along the first direction and away from the second conveyor belt 12. The loading belt 30 is used for material supply. When the materials on the tray 90 are needed, the loading belt 30 will convey the tray 90 carrying the materials on the second conveyor belt 12. The unloading belt 40 is connected to the second station 17 of the first conveyor belt 11. The unloading belt 40 is configured to convey the empty tray 90 to the second station 17 along the first direction and towards the first conveyor belt 11. After the material supply is completed, the empty tray 90 will be conveyed onto the first conveyor belt 11 by the unloading belt 40, and then the empty tray 90 will be taken away by the feeding belt 20, thereby forming a cyclic material supply process. A buffer zone for the material supply is created by the diverting assembly 10, and the tray 90 carrying materials can first circulate on the diverting assembly 10, and when the material supply is needed, the tray 90 carrying materials can be supplied through the loading belt 30.

In the above-mentioned conveying device 100, by arranging the diverting assembly 10, the tray 90 carrying materials conveyed by the feeding belt 20 can circulate on the looped diverting assembly 10. When the material supply is needed, only the tray 90 carrying materials on the diverting assembly 10 needs to be conveyed onto the loading conveyor 30 for material supply, and after the material supply is completed, the empty tray 90 is conveyed back to the diverting assembly 10 by the unloading belt 40, then taken away by the feeding belt 20. The arrangement of the diverting assembly 10 solves the problem of mismatched intervals between the feeding by the feeding belt 20 and the supplying by the loading belt 30, thus ensuring the stability of material supply.

In one embodiment, the diverting assembly 10 is designed as a rectangular loop, so that the tray 90 can circulate along a rectangular loop path on the diverting assembly 10. The first conveyor belt 11 is in an elongated shape and is arranged in the first direction. The second conveyor belt 12 is in an elongated shape and is arranged in the first direction. The first conveyor belt 11 and the second conveyor belt 12 are arranged in parallel and spaced apart. The first diverting belt 13 is in an elongated shape and arranged in the second direction. The second diverting belt 14 is in an elongated shape and arranged in the second direction. The first diverting belt 13 and the second diverting belt 14 are arranged in parallel between the first conveyor belt 11 and the second conveyor belt 12 to form the rectangular loop. Specifically, with reference to FIG.1, a conveying direction of the first conveyor belt 11 is from the second station 17 to the first station 16, a conveying direction of the first diverting belt 13 is from the first station 16 to the fourth station 19, a conveying direction of the second conveyor belt 12 is from the fourth station 19 to the third station 18, and a conveying direction of the second diverting belt 14 is from the third station 18 to the second station 17, that is, the conveying directions of first conveyor belt 11, the first diverting belt 13, the second conveyor belt 12 and the second diverting belt 14 together form the clockwise direction of the diverting assembly 10. It can be understood that the first conveyor belt 11 and the second conveyor belt 12 have the same length, the first diverting belt 13 and the second diverting belt 14 have the same length, and the first conveyor belt 11, the second conveyor belt 12, the first diverting belt 13 and the second diverting belt 14 have the same structure. By arranging a number of rollers driven by a motor to rotate in one direction on a frame, the conveyance of the tray 90 is achieved. There is no limitation on the structures of the first conveyor belt 11, the second conveyor belt 12, the first diverting belt 13 and the second diverting belt 14, as long as the first conveyor belt 11, the second conveyor belt 12, the first diverting belt 13 and the second diverting belt 14 can achieved cyclical movement of the tray 90 along a rectangular loop path.

Refer to FIG. 1 to FIG. 6 again. The transfer vehicle 15 is a lifting transfer vehicle (which is generally used to change the movement direction of materials, and to convey the materials into or out of the main conveyor line from a branch line). The transfer vehicle 15 has a lifting function. When it is needed to change the movement direction of the tray 90, the transfer vehicle 15 will lift the tray 90 and transfer it onto a conveyor belt with a different conveying direction. Taking the transfer vehicle 15 at the first station 16 as an example, the transfer vehicle 15 at the first station 16 is located at the joint between the first conveyor belt 11 and the first diverting belt 13. The first conveyor belt 11 conveys the tray 90 along the direction opposite to the first direction, and the first diverting belt 13 conveys the tray 90 along the second direction. When it is needed to transfer the tray 90 on the first conveyor belt 11 onto the first diverting belt 13, the transfer vehicle 15 at the first station 16 will lift the tray 90 moved to the first station 16 of the first conveyor belt 11, and then the tray 90 is transferred onto the first reversing belt 13 through a conveyor belt of the transfer vehicle 15 at the first station 16, thereby changing the movement direction of the tray 90 from the direction opposite to the first direction to the second direction. It can be understood that the transfer vehicles 15 at the second station 17, the third station 18 and the fourth station 19 all have the same structure and working principle as the transfer vehicle 15 at the first station 16. By arranging the four transfer vehicles 15 respectively at the four corners of the rectangular loop-shaped diverting assembly 10, the direction changing requirement of the tray 90 moved to a corner along the rectangular loop path is met.

In one embodiment, the feeding belt 20 includes a support frame 21, feeding rollers 22 mounted on the support frame 21, and a feed drive member 23 connected to the feeding rollers 22. The support frame 21 is placed on the floor of the external environment. The support frame 21 is configured to support the feeding belt 20 as a whole. The feed rollers 22 are each cylindrical and are arranged along the second direction. The feed rollers 22 are arranged at intervals in sequence along the first direction, that is, the feed rollers 22 arranged on the support frame 21 at intervals along the conveying direction of the feeding belt 20. The feed drive member 23 is fixed to the support frame 21, and the feed drive member 23 is connected to the feed rollers 22. The feed drive member 23 is configured to drive the feeding rollers 22 to rotate bidirectionally relative to the support frame 21. In this embodiment, the feed drive member 23 is a motor.

In one embodiment, the loading belt 30 is arranged along the first direction, and the loading belt 30 is connected to the third station 18 of the second conveyor belt 12. Since the conveying direction of the second conveyor belt 12 is from the fourth station 19 to the third station 18, when the tray 90 moves to the third station 18, if the transfer vehicle 15 at the third station 18 works to lift the tray 90, the tray 90 will be transferred to the second diverting belt 14, and if the transfer vehicle 15 at the third station 18 does not work, the tray 90 will be conveyed onto the loading belt 30 under the drive of the second conveyor belt 12 to realize the material supply. The unloading belt 40 is arranged along the first direction, and the loading belt 30 is parallel to the unloading belt 40. The unloading belt 40, the first conveyor belt 11 and the feeding belt 20 are arranged to extend along a single direction. The unloading belt 40 is connected to the second station 17 of the first conveyor belt 11. Since the conveying direction of the first conveyor belt 11 is from the second station 17 to the first station 16, the unloading belt 40 can convey the empty tray 90 after the material supply onto the first conveyor belt 11. It can be understood that the specific structures of the loading belt 30 and the unloading belt 40 are similar to that of the feeding belt 20, and all of them are designed with multiple rollers mounted on a frame and driven by motors to rotate, thereby achieving the conveyance of the pallet 90, with exception that the feeding belt 20 can achieve bidirectional conveyance, and the loading belt 30 and the unloading belt 40 can only carry out unidirectional conveyance. The specific structures of the loading belt 30 and the unloading belt 40 are not limited here. It is sufficient to achieve that the loading belt 30 and the second conveyor belt 12 have the same conveying direction, and the unloading belt 40 and the first conveyor belt 11 have the same conveying direction.

In one embodiment, the conveying device 100 also includes a guide assembly 50. The guide assembly 50 is connected to the diverting assembly 10. The first conveyor belt 11, the first diverting belt 13, the second conveyor belt 12 and the second diverting belt 14 are arranged around the guide assembly 50, at the outer side of the guide assembly 50. That is, the guide assembly 50 is respectively connected to the first conveyor belt 11, the first diverting belt 13, the second conveyor belt 12 and the second diverting belt 14. The guide assembly 50 is configured to guide the tray 90, thereby preventing the tray 90 from being collided and/or damaged during the movement along the rectangular loop path on the diverting assembly 10.

In one embodiment, the guide assembly 50 includes a mounting seat 51, a guide strip 52 and a rubber strip 53. A plurality of the mounting seats 51 are provided, each connected to the first conveyor belt 11, the first diverting belt 13, the second conveyor belt 12 or the second diverting belt 14. The mounting seats 51 are configured to fix the guide assembly 50 to the diverting assembly 10. The guide strip 52 is looped, and a shape of the guide strip 52 corresponds to a shape formed by the first conveyor belt 11, the first diverting belt 13, the second conveyor belt 12 and the second diverting belt 14. The mounting seats 51 are arranged at intervals along the guide strip 52, at an inner side of the guide strip 52. The guide strip 52 is configured to guide the tray 90 moving on the diverting assembly 10. The rubber strip 53 is sleeved over the guide strip 52. The rubber strip 53 is configured to prevent the tray 90 or the guide strip 52 from being damaged due to collision or friction between the tray 90 and the guide strip 52.

In one embodiment, each of the mounting seats 51 includes a supporting block 511, a connecting rod 512 passing through the supporting block 511, and an adjustment block 513 connected to the connecting rod 512. The supporting block 511 is fixedly connected to the first conveyor belt 11, the first diverting belt 13, the second conveyor belt 12 or the second diverting belt 14. The supporting block 511 is configured to fix the mounting seat 51 to the diverting assembly 10. The connecting rod 512 passes through the supporting block 511, and is perpendicular to the supporting block 511. The connecting rod 512 is detachably connected to the guide strip 52. The adjustment block 513 is threadedly connected to the connecting rod 512 and abuts against the supporting block 511. The adjustment block 513 is arranged on a side of the supporting block 511 away from the guide strip 52. The adjustment block 513 is configured to fix the connecting rod 512 to the supporting block 511. Since the plurality of the mounting seats 51 are arranged along the guide strip 52 and at the inner side of the guide strip 52, the connecting rods 512 of the plurality of the mounting seats 51 simultaneously apply multi-directional tension to the guide strip 52, thereby tensioning and securing the guide strip 52 at the center position of the diverting assembly 10. In this embodiment, the connecting rod 512 includes an extension portion 5121 and a clamped portion 5122. The extension portion 5121 is designed to be cylindrical. The extension portion 5121 passes through the supporting block 511 and is threadedly connected to the adjustment block 513. The extension direction of the extension portion 5121 is perpendicular to the supporting block 511. The clamped portion 5122 is disposed at one end of the extension portion 5121 close to the guide strip 52, and the clamped portion 5122 is protruded from the outer surface of the extension portion 5121 away from the extension portion 5121. The clamped portion 5122 is configured to clamp with the guide strip 52. Furthermore, a clamping groove 521 is provided on the guide strip 52. The cross section of the clamping groove 521 is T-shaped. The clamping groove 521 is configured to extend along the guide strip 52. The clamped portion 5122 is correspondingly clamped into the clamping groove 521.

In one embodiment, at least two adjustment holes 5115 are provided on the supporting block 511. The at least two adjustment holes 5115 are arranged at intervals in a direction perpendicular to the movement direction of the tray 90. That is, the at least two adjustment holes 5115 are arranged at intervals in a direction perpendicular to both the first direction and the second direction. The connecting rod 512 is passed through one of the at least two adjustment holes 5115. By passing the connecting rod 512 through different adjustment holes 5115, the installation height of the guide strip 52 can be adjusted to accommodate the height dimensions of various trays 90.

In one embodiment, the guide strip 52 is looped into a rectangular shape, with its four corners respectively corresponding to the first station 16, second station 17, third station 18 and fourth station 19. Chamfers 525 are provided on the guide strip 52, and are each arc-shaped. The chamfers 525 are correspondingly disposed at the four corners of the rectangular-shape guide strip 52. That is, the chamfers 525 are disposed corresponding to the transfer vehicles 15. The inclusion of the chamfers 525 prevents the guide strip 52 from scratching the tray 90 during the direction-changing operation performed by the transfer vehicles 15, thereby improving the movement stability of the tray 90.

In one embodiment, a shape of the rubber strip 53 corresponds to the shape of the guide strip 52. An embedded groove 535 is provided on the rubber strip 53, with a shape corresponding to the shape of the guide strip 52. The embedded groove 535 is looped and disposed on a side of the rubber strip 53 close to the guide strip 52. The guide strip 52 is correspondingly embedded in the embedded groove 535. The embedded groove 535 is configured to clamp the rubber strip 53 onto the guide strip 52, which facilitates the disassembly and assembly operations between the rubber strip 53 and the guide strip 52, and facilitates the maintenance and replacement of the rubber strip 53.

The working process of the conveying device provided by the present disclosure is as follows. The tray 90 carrying materials is fed by the feeding belt 20 to the first station 16 of the first conveyor belt 11, and the transfer vehicle 15 at the first station 16 receives the tray 90 carrying materials and transfers it onto the first diverting belt 13, so that the tray 90 carrying materials circulates along a rectangular loop path on the diverting assembly 10. When material supply is needed, the tray 90 carrying materials is moved to the third station 18. At this time, the transfer vehicle 15 located at the third station 18 does not lift the tray 90, so that the tray 90 carrying the materials is directly conveyed onto the loading belt 30 by the second conveyor belt 12 to complete the material supply. After the material supply is completed, the empty tray 90 is conveyed to the second station 17 by the unloading belt 40. The empty tray 90 is moved from the second station 17 to the first station 16 by the first conveyor belt 11. At this time, the transfer vehicle 15 located at the first station 16 does not lift the empty tray 90, and then the empty tray 90 is conveyed onto the feeding belt 20 by the first conveyor belt 11. The feeding belt 20 then take away the empty tray 90, and the empty tray 90 is reloaded.

The technical features of the above-mentioned embodiments can be combined arbitrarily. In order to make the description concise, not all possible combinations of the technical features in the above-mentioned embodiments are described. However, as long as there is no contradiction in the combination of these technical features, the combination of these technical features should be considered to be within the scope of this specification.

The above-mentioned embodiments only express several implementation methods of the present disclosure. The description thereof is relatively specific and detailed, but it should not be understood as limiting the scope of the present disclosure. It should be pointed out that, for ordinary technicians in this field, several variations and improvements can be made without departing from the concept of the present disclosure, and these all fall within the scope of protection of the present disclosure. Therefore, the scope of protection of this present disclosure should be based on the attached claims.

## Claims

1. A conveying device (100) for conveying a tray (90), **characterized by** comprising:
a diverting assembly (10) comprising a first conveyor belt (11), a second conveyor belt (12), a first diverting belt (13), a second diverting belt (14) and transfer vehicles (15), wherein the first conveyor belt (11) and the second conveyor belt (12) are arranged side by side in a second direction (Y), the first diverting belt (13) and the second diverting belt (14) are arranged in a first direction (X) between the first conveyor belt (11) and the second conveyor belt (12), the first conveyor belt (11), the first diverting belt (13), the second conveyor belt (12) and the second diverting belt (14) are joined to form a loop, two ends of the first conveyor belt (11) in the first direction (X) are respectively provided with a first station (16) and a second station (17), two ends of the second conveyor belt (12) in the first direction (X) are respectively provided with a third station (18) and a fourth station (19), the transfer vehicles (15) are respectively disposed at the first station (16), the second station (17), the third station (18) and the fourth station (19), and the transfer vehicles (15) are configured to change a movement direction of the tray (90) so as to enable the tray (90) move through joints between the first (11) and second (12) conveyor belts and the first (13) and second (14) diverting belts with different conveying directions;
a feeding belt (20) aligned to the first station (16) of the first conveyor belt (11) and configured to feed the tray (90) which carries materials to the first station (16) along the first direction (X) and towards the first conveyor belt (11) and to take the tray (90) which is empty away from the first station (16) along a direction opposite to the first direction (X) and away from the first conveying belt (11);
a loading belt (30) connected to the third station (18) of the second conveyor belt (12) and configured to convey the tray (90) which carries materials from the third station (18) along the first direction (X) and away from the second conveyor belt (12); and
an unloading belt (40) connected to the second station (17) of the first conveyor belt (11) and configured to convey the tray (90) which is empty to the second station (17) along the direction opposite to the first direction (X) and towards the first conveyor belt (11).

2. The conveying device (100) according to claim 1, **characterized by** that the conveying device (100) further comprises a guide assembly (50) connected to the diverting assembly (10), and the first conveyor belt (11), the first diverting belt (13), the second conveyor belt (12) and the second diverting belt (14) are arranged around the guide assembly (50).

3. The conveying device (100) according to claim 2, **characterized by** that the guide assembly (50) comprises a mounting seat (51), a guide strip (52) and a rubber strip (53);
a plurality of the mounting seats (51) are provided and are each connected to the first conveyor belt (11), the first diverting belt (13), the second conveyor belt (12) or the second diverting belt (14);
the guide strip (52) is looped, a shape of the guide strip (52) corresponds to a shape enclosed by the first conveyor belt (11), the first diverting belt (13), the second conveyor belt (12) and the second diverting belt (14), and the rubber strip (53) is sleeved over the guide strip (52).

4. The conveying device (100) according to claim 3, **characterized by** that the plurality of the mounting seats (51) are arranged at intervals along the guide strip (52) and at an inner side of the guide strip (52);
each of the plurality of the mounting seats (51) comprises a supporting block (511), a connecting rod (512) passing through the supporting block (511), and an adjustment block (513) connected to the connecting rod (512), the supporting block (511) is fixedly connected to the first conveyor belt (11), the first diverting belt (13), the second conveyor belt (12) or the second diverting belt (14), the connecting rod (512) is detachably connected to the guide strip (52), and the adjustment block (513) is threadedly connected to the connecting rod (512) and abuts against the supporting block (511).

5. The conveying device (100) according to claim 4, **characterized by** that the connecting rod (512) comprises an extension portion (5121) and a clamped portion (5122), the extension portion (5121) passes through the supporting block (511) and is threadedly connected to the adjustment block (513), the clamped portion (5122) is disposed at one end of the extension portion (5121) close to the guide strip (52) and protrudes from a surface of the extension portion (5121) away from the extension portion (5121), a clamping groove (521) is provided on the guide strip (52), and the clamped portion (5122) is correspondingly clamped into the clamping groove (521).

6. The conveying device (100) according to claim 4, **characterized by** that at least two adjustment holes (5115) are provided on the supporting block (511), the at least two adjustment holes (5115) are arranged at intervals perpendicular to the movement direction of the tray (90), and the connecting rod (512) is passed through one of the at least two adjustment holes (5115).

7. The conveying device (100) according to claim 3, **characterized by** that the guide strip (52) is looped into a rectangular shape, four corners of the guide strip (52) respectively correspond to the first station (16), the second station (17), the third station (18) and the fourth station (19), the guide strip (52) is provided with chamfers (525), and the chamfers (525) are correspondingly disposed at the four corners of the guide strip (52) which is rectangular.

8. The conveying device (100) according to claim 3, **characterized by** that a shape of the rubber strip (53) corresponds to the shape of the guide strip (52);
the rubber strip (53) is provided with an embedded groove (535), the embedded groove (535) is ring-shaped and disposed on a side of the rubber strip (53) close to the guide strip (52), and the guide strip (52) is correspondingly embedded in the embedded groove (535).

9. The conveying device (100) according to claim 1, **characterized by** that the loading belt (30) and the unloading belt (40) are parallel, and the unloading belt (40), the first conveying belt (11), and the feeding belt (20) are disposed along a single direction.

10. The conveying device (100) according to claim 1, **characterized by** that the feeding belt (20) comprises a support frame (21), feeding rollers (22) mounted on the support frame (21), and a feed drive member (23) connected to the feeding rollers (22), the feeding rollers (22) are each rotatable relative to the support frame (21) and are arranged on the support frame (21) at intervals in a conveying direction of the feeding belt (20), and the feed drive member (23) is configured to drive the feeding rollers (22) to bidirectionally rotate relative to the support frame (21).
